Europäisches Patentamt

European Patent Office

Office européen des brevets

(19)

(11) Numéro de publication : **0 065 338**
**B1**

(12) # FASCICULE DE BREVET EUROPÉEN

(45) Date de publication du fascicule du brevet :
18.06.86

(51) Int. Cl.⁴ : **F 16 L   5/02, H 02 G   3/22**

(21) Numéro de dépôt : **82200563.3**

(22) Date de dépôt : **10.05.82**

(54) Coupe-feu pour le passage d'au moins un élément creux à travers une paroi d'un bâtiment.

(30) Priorité : **18.05.81 LU 83374**
**03.06.81 LU 83410**

(43) Date de publication de la demande :
**24.11.82 Bulletin 82/47**

(45) Mention de la délivrance du brevet :
**18.06.86 Bulletin 86/25**

(84) Etats contractants désignés :
**BE CH DE FR GB LI NL SE**

(56) Documents cités :
**DE-A- 2 726 241**
**FR-A- 2 378 909**

(73) Titulaire : **INTELLECTUAL TRADE CY S.A.**
**Boulevard Royal, 2**
**Luxembourg (LU)**
**CH DE FR GB LI NL SE**
**DRIM Ltd**
**33 Eastcheap**
**London EC3M 1DT (GB)**
**BE**

(72) Inventeur : **Heinen, Hans Dieter**
**15, rue Cathérine André**
**B-4890 Malmedy (BE)**

(74) Mandataire : **Callewaert, Jean et al**
**Bureau Gevers S.A. rue de Livourne, 7 - Bte 1**
**B-1050 Bruxelles (BE)**

Jouve, 18, rue St-Denis, 75001 Paris, France

## Description

La présente invention est relative à un coupe-feu pour le passage d'au moins un élément creux, tel que tuyau, gaine, tube, à travers une paroi d'un bâtiment, notamment un mur ou un plafond, comprenant une collerette en matière sensiblement incombustible montée autour de l'élément.

Les techniques généralement connues jusqu'à présent pour empêcher la propagation d'un incendie à travers une paroi, à l'endroit du passage d'un tel élément creux consistent à utiliser un dispositif d'étranglement comprenant essentiellement un produit foisonnant sous l'effet de la chaleur, appliqué autour de l'élément creux, de manière à exercer sur ce dernier une pression radiale. Cette pression doit être suffisante pour pouvoir écraser et étrangler l'élément ramolli sous l'effet de la chaleur.

Ce dispositif exige une main-d'œuvre relativement importante et ne convient que pour des cas très particuliers. Il doit notamment s'agir d'éléments réalisés en une matière ayant un point de ramollissement relativement bas, telle qu'une matière thermoplastique à paroi relativement mince et présentant un diamètre inférieur à 20 cm. De plus, un tel dispositif nécessite un certain temps avant que le produit foisonnant n'ait étranglé l'élément.

Le document FR-A1-2 378 909 présente un dispositif servant de coupe-feu à la traversée de tuyaux à travers une paroi d'un bâtiment. Ce dispositif comprend une collerette en matière sensiblement incombustible montée autour de l'élément traversant la paroi et permettant de résoudre généralement la plus part des problèmes soulevés ci-dessus.

Un des buts essentiels de la présente invention consiste à présenter un coupe-feu donnant une solution très efficace pour tout type d'élément creux, notamment pour des éléments présentant un diamètre intérieur relativement important.

A cet effet, suivant l'invention, la collerette comprend au moins un écran d'allure sensiblement cylindrique et s'étendant également autour de l'élément creux réalisé en un matériau sensiblement étanche au gaz, conducteur de la chaleur et présentant un point de fusion inférieur à 900 °C.

Suivant une forme de réalisation particulière de l'invention, la collerette précitée est montée contre la surface extérieure de l'élément creux traversant la paroi.

Pour le passage, à travers une paroi, d'un élément pouvant être soumis à des déplacements et/ou dilatations longitudinaux et/ou transversaux relativement importants, notamment d'un tube en acier dans lequel circule un fluide à température variable, ou d'un tube, d'une certaine longueur, soumis à une chaleur extérieure très variable, réalisé en un matériau présentant un coefficient de dilatation relativement important et présentant une configuration géométrique particulière, la collerette précitée s'étend de préférence à une certaine distance autour de cet élément, de manière que ce dernier puisse se déplacer et se dilater librement en des directions longitudinales et transversales à l'intérieur de la collerette.

Plus particulièrement, dans cette dernière forme de réalisation, le coupe-feu suivant l'invention comprend au moins un bouchon souple et compressible, tel qu'un diaphragme, en une matière sensiblement incombustible et étanche aux gaz, placé autour de cet élément, entre ce dernier et la collerette.

D'autres détails et particularités de l'invention ressortiront de la description donnée ci-après, à titre d'exemple non limitatif, de quelques formes de réalisation particulières de l'invention, avec référence aux dessins annexés.

La figure 1 est une vue en coupe longitudinale et avec brisure partielle d'un coupe-feu, suivant l'invention, monté autour d'un tuyau en matière plastique.

La figure 2 est une vue analogue d'une autre forme de réalisation de coupe-feu, suivant l'invention, monté autour d'un tube en acier pouvant subir des dilatations importantes en des directions longitudinales et transversales.

La figure 3 représente un graphique montrant la relation entre le diamètre d'un élément creux et la largeur de la collerette.

La figure 4 est une vue en coupe longitudinale et avec brisure partielle d'un coupe-feu, suivant une troisième forme de réalisation de l'invention.

Dans les figures, les mêmes chiffres de référence désignent des parties identiques ou analogues.

D'une façon générale, l'invention concerne un coupe-feu pour le passage d'au moins un élément creux 1, tel que tuyau, gaine, tube, à travers une paroi 2 d'un bâtiment, notamment un mur ou un plafond, comprenant, à au moins un des côtés de la paroi 2, une collerette 3 en une matière sensiblement incombustible montée autour de l'élément 1 et en applique contre la paroi 2.

Cette collerette 3 est avantageusement constituée d'un manchon à base de fibres incombustibles, tel qu'un manchon en laine de roche, formé, pour la facilité de montage, d'au moins deux portions séparées a et b enduites intérieurement et extérieurement d'un mastic anti-feu et assemblées autour de l'élément 1.

La largeur de la collerette est de préférence comprise entre 2 à 6 fois le diamètre intérieur de l'élément creux 1, tandis que son épaisseur est comprise entre 3 à 10 cm.

De plus, la collerette comprend au moins un écran 4 réalisé en un matériau sensiblement étanche aux gaz, conducteur de la chaleur et présentant un point de fusion inférieur à 900 °C et de préférence inférieur à 650 °C.

2

Cet écran 4 s'étend autour de l'élément creux entre deux couches de mastic anti-feu 5 et 6, de manière à être noyé complètement dans ce mastic anti-feu.

Cet écran est généralement formé par une feuille mince d'aluminium, de l'ordre de 0,03 à 2 mm et de préférence de l'ordre de 0,05 à 0,10 mm.

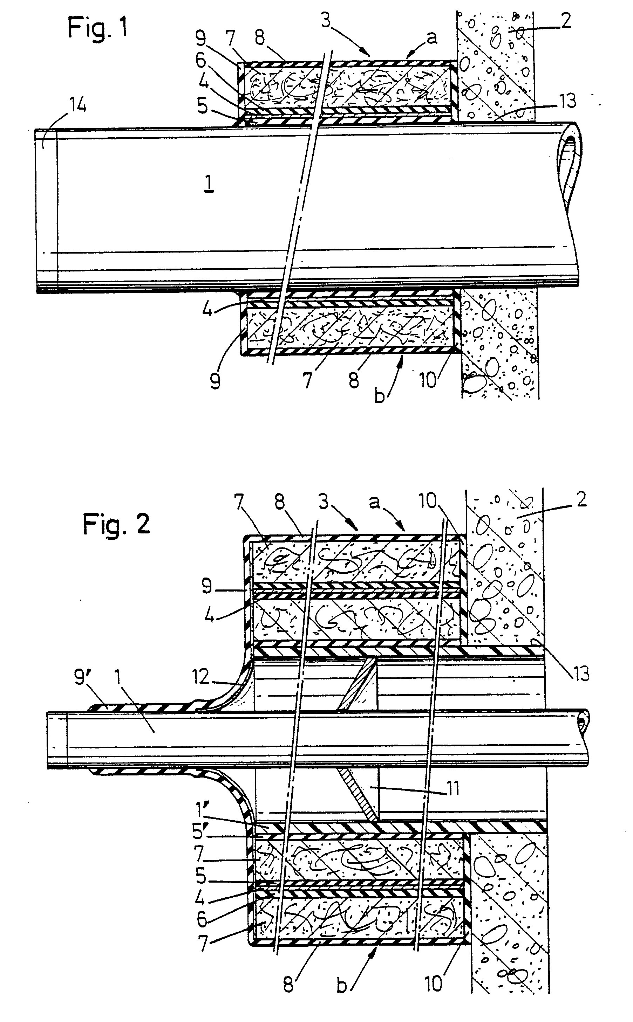

Comme déjà signalé ci-dessus, la figure 1 concerne une forme de réalisation d'un coupe-feu suivant l'invention pour le passage d'un élément creux en une matière plastique.

Toutefois, cet élément peut être constitué de n'importe quelle matière, comme par exemple d'une matière thermodurcissable ou thermoplastique, ou d'une matière conductrice de la chaleur ou non, notamment verre, acier, cuivre, zinc, etc.

Dans cette forme de réalisation, la collerette 3 est montée contre la surface extérieure de cet élément, de préférence par l'intermédiaire d'un mastic anti-feu, de manière à réaliser l'étanchéité entre l'élément et la collerette. Cette dernière comprend successivement une première couche de mastic anti-feu 5, pour assurer l'étanchéité susdite, une feuille d'aluminium 4, s'étendant tout autour de l'élément 1, suivie d'une nouvelle couche de mastic 6, d'une couche de laine de roche 7 et d'une couche extérieure ou de finition 8 de mastic anti-feu, qui s'étend également sur le bord latéral de la collerette opposé à celui s'appliquant contre la paroi 2, comme indiqué par la référence 9.

Afin d'assurer une étanchéité entre la collerette et la paroi, il est également très utile de prévoir entre cette dernière et la collerette une telle couche de mastic 10, cette couche 10 étant soit appliquée immédiatement avant la pose de la collerette sur la paroi autour de l'élément 1, soit directement sur le bord latéral correspondant de la collerette lors de la pose de cette dernière, de manière à ce que le mastic soit encore collant.

Il faut donc que le mastic anti-feu relie la collerette par collage aussi bien à la paroi 2 qu'à l'élément creux 1.

La figure 2 concerne un coupe-feu suivant l'invention qui convient particulièrement pour le passage, à travers une paroi, d'un élément pouvant être soumis à des déplacements et/ou dilatations longitudinaux et/ou transversaux relativement importants. Il peut notamment s'agir d'une conduite en acier dans laquelle circule un fluide dont la température peut varier entre de larges limites. Une telle conduite peut, suivant la nature du fluide, subir des dilatations très importantes qui peuvent atteindre, dans certains cas, une amplitude de 10 cm environ.

Il peut également s'agir d'une conduite métallique, ayant une certaine longueur, exposée extérieurement à un effet de chaleur très variable, par exemple au soleil, présentant un coefficient de dilatation relativement important et s'étendant suivant une configuration géométrique nécessitant une libre suspension de la conduite.

Dans une telle forme de réalisation, la collerette 2 s'étend à une certaine distance autour de l'élément 1 de manière à ce que ce dernier puisse se déplacer et se dilater librement en des directions longitudinales et transversales avec l'amplitude voulue.

Au moins un bouchon souple et compressible 11, tel qu'un diaphragme, en matière sensiblement incombustible et étanche aux gaz est placé à l'intérieur de la collerette 3, autour de l'élément 1, de manière à assurer l'étanchéité entre la collerette 3 et l'élément 1 sans gêner le déplacement de ce dernier, par exemple par suite de sa dilatation. Il est utile que ce bouchon présente une élasticité suffisante de manière à pouvoir suivre le mouvement de l'élément creux 1 tout en maintenant l'étanchéité entre ce dernier et la collerette.

En pratique, on place généralement un tel bouchon 11 à proximité de chacune des extrémités de la collerette 3, à l'intérieur de cette dernière.

Dans le cas d'une collerette montée à une certaine distance de l'élément 1, comme dans la forme de réalisation montrée à la figure 2, on monte la collerette, de préférence par l'intermédiaire d'une couche de mastic anti-feu 5' sur un élément creux 1', qui est par exemple similaire à l'élément 1 de la figure 1. Cet élément creux 1' présente une section suffisamment grande par rapport à celle de l'élément central 1, de manière à s'étendre à une certaine distance autour de ce dernier et alors permettre son déplacement provoqué par exemple par dilatation.

Ainsi, la distance séparant l'élément 1 de la collerette 3 est généralement comprise entre 1 à 10 cm et de préférence entre 2 à 5 cm.

Dans la forme de réalisation montrée dans la figure 2, la collerette présente, à son extrémité opposée à celle appliquée contre la paroi 2, une bavette d'obturation souple 12 s'étendant sous forme d'un tronc de cône à l'extérieur de la collerette. Cette bavette est fixée contre l'élément 1 par l'intermédiaire d'une couche de mastic anti-feu 9' se prolongeant à partir de la couche de mastic 9 sur une partie de la surface extérieure du tube, située en dehors de la collerette.

La bavette 12 peut par exemple être constituée d'une toile de fibres de verre.

L'écran 4 est situé à une certaine distance de l'élément 1', à l'intérieur de la couche de laine de roche 7, quoiqu'il soit parfaitement possible de prévoir l'écran 4 à proximité de l'élément 1', comme dans la forme de réalisation montrée à la figure 1.

De plus, on pourrait prévoir plusieurs écrans successifs noyés dans du mastic anti-feu et séparés les uns des autres par une couche de laine de roche. On pourrait ainsi envisager une combinaison des formes de réalisation montrées aux figures 1 et 2.

Il a été constaté que la présence d'un ou de plusieurs écrans du type exposé ci-dessus permet

**0 065 338**

d'augmenter considérablement les performances au feu surtout lorsque l'élément creux 1, dans la forme de réalisation montrée à la figure 1, peut brûler ou fondre sous l'action de la chaleur et ainsi disparaître au moins partiellement, comme par exemple un tuyau en une matière synthétique, thermoplastique ou thermodurcissable. Cet effet favorable assez inattendu semble être dû à une triple fonction accomplie par cet écran.

En effet, dans une première phase, au début de l'incendie, l'écran réaliserait une fonction modératrice en créant une zone froide à l'intérieur de la collerette et en empêchant le passage de vapeur d'eau, provenant du mastic, qui risquerait de créer des petits canaux à travers la collerette vers la surface extérieure de cette dernière.

Dans un second stade, lors de l'élévation de la température de la collerette, l'élément 1 s'échauffe et la partie de celui-ci à proximité de la paroi fond, brûle et disparaît. Ceci a comme conséquence que la collerette est directement exposée à la chaleur.

Grâce à la présence de l'écran 4 protégé par la couche 5 de mastic anti-feu, on évite la fissuration de la collerette. De plus, l'écran 4 réfléchit quelque peu la chaleur, ce qui freine l'augmentation de température de la collerette.

Dans un troisième stade, la partie de l'écran 4 à proximité de la paroi et le plus exposé à la chaleur fond à son tour. Ainsi, les ponts thermiques créés par cet écran sont coupés, de sorte que la chaleur transmise latéralement par l'écran vers l'extérieur de la collerette est réduite au minimum malgré ses propriétés conductrices de chaleur.

Ce triple phénomène a comme conséquence de freiner considérablement l'augmentation de la température de la collerette au début de l'incendie comparé à une collerette ne présentant pas un tel écran.

L'élément 1 peut être soit encastré dans la paroi 2, comme montré aux figures 1 et 2, soit monté dans une baie prévue dans la paroi.

Dans chacun des cas, la paroi, si elle est réalisée en maçonnerie ou béton, doit de préférence avoir une épaisseur minimum de 150 mm.

De plus, si l'élément traverse la paroi par une baie ayant une section supérieure à la section extérieure de l'élément, un panneau en matière sensiblement incombustible doit être utilisé pour obturer l'espace dans la baie entre l'élément et les bords de cette dernière.

Si ce panneau est un matelas en laine de roche, celui-ci présente de préférence une épaisseur de 150 mm et est appliqué contre ou dans la baie autour de l'élément avant la pose de la collerette.

Ci-après sont donnés quelques résultats d'essais pratiques pour illustrer concrètement les avantages du coupe-feu suivant l'invention.

Premier type d'essais.

Ces essais ont été effectués avec un montage du type montré à la figure 1, dans lequel l'élément 1 était constitué d'un tuyau en chlorure de polyvinyle avec un diamètre intérieur de 160 mm et une longueur de 1 050 mm à partir de la paroi. Ce tuyau était encastré horizontalement dans une paroi verticale en béton de 150 mm d'épaisseur et était bouché à son extrémité opposée à la paroi.

La collerette 3 était constituée successivement (a) d'une couche intérieure d'un mastic anti-feu dans laquelle sont noyées deux feuilles superposées d'aluminium de 50 $\mu$ d'épaisseur, séparées l'une de l'autre par une couche de ce mastic de 4 mm, (b) d'une couche de laine de roche de 50 mm et (c) d'une couche de finition extérieure également en ce même mastic anti-feu de 2 mm d'épaisseur.

Une couche de mastic de 2 à 4 mm était également prévue entre la paroi et la collerette ainsi que sur le bord opposé de celle-ci.

La largeur totale de la collerette était de 500 mm et un bouchon 14 en matière sensiblement incombustible était prévu dans l'extrémité du tuyau 1 opposée à la paroi.

Un incendie a été simulé au moyen d'un chalumeau tenu dans l'axe du tuyau, du côté opposé de la paroi par rapport à la collerette, à une distance de 300 mm de cette paroi, avec la flamme dirigée vers le tuyau. La température moyenne dans la flamme était de l'ordre de 800 °C.

Des mesures de température en fonction du temps ont été effectuées en aval de la collerette, d'une part, sur la surface du tuyau et, d'autre part, à une certaine profondeur de l'ordre de 50 mm dans le tuyau.

1. Résultats des mesures sur la surface du tuyau.

| temps en minutes | 5' | 10' | 15' | 30' | 60' | 120' | 150' | 180' |
|---|---|---|---|---|---|---|---|---|
| $t°_A$ | 120 | 110 | 105 | 130 | 132 | 130 | 144 | 160 |
| $t°_B$ | 80 | 60 | 70 | 65 | 80 | 85 | 95 | 120 |
| $t°_C$ | 60 | 90 | 90 | 95 | 90 | 90 | 108 | 110 |

4

$t°_A$ : température à l'endroit où le tuyau sort de la collerette, côté supérieur.

$t°_B$ : température à l'endroit où le tuyau sort de la collerette, côté inférieur.

$t°_C$ : température à 450 mm de l'endroit où le tuyau sort de la collerette, côté supérieur.

« temps en minutes » : désigne le moment, après la mise en route du chalumeau, de la mesure de la température.

2. Résultats des mesures à l'intérieur du tuyau.

Tableau II

| temps en minutes | | 10' | 20' | 30' | 75' | 90' |
|---|---|---|---|---|---|---|
| $t°_1$ | | 300 | 310 | 300 | 300 | 260 |
| $t°_2$ | | 220 | 200 | 210 | 210 | 200 |
| $t°_3$ | | 140 | 150 | 150 | 140 | 120 |
| $t°_4$ | h | 210 | 200 | 180 | 180 | 160 |
| | m | 150 | 160 | 150 | 150 | 140 |
| | b | 160 | 170 | 160 | 140 | 140 |
| $t°_5$ | | 120 | 140 | 120 | 130 | 120 |

Les mesures ont été prises sur une profondeur de 50 mm à l'intérieur du tuyau.

$t°_1$ : température à l'endroit où le tuyau sort de la collerette, sur une profondeur de 50 mm à partir du côté supérieur.

$t°_2$ : température à une distance de 450 mm de l'endroit où le tuyau sort de la collerette, sur une profondeur de 50 mm à partir du côté supérieur.

$t°_3$ : température à une distance de 450 mm de l'endroit où le tuyau sort de la collerette, sur une profondeur de 50 mm à partir du côté inférieur.

$t°_4$ : température à une distance de 250 mm de l'endroit où le tuyau sort de la collerette sur une distance de 50 cm à partir du côté respectivement supérieur (h), latéral à mi-hauteur (m) et inférieur (b).

$t°_5$ : température à l'endroit où le tuyau sort de la collerette, à 50 mm du côté inférieur.

Lors de ces essais, on a constaté, après 45 minutes, l'apparition d'une flèche de 5 mm dans la partie supérieure du tuyau, à une distance de 130 mm de l'endroit où celui-ci sort de la collerette ; après 75 minutes, cette flèche était devenue 10 mm et est ensuite restée constante jusqu'à la fin du test.

· Des tests analogues ont été effectués sur un coupe-feu sans feuilles d'aluminium.

Il a été constaté que la température aux points de mesure montait beaucoup plus rapidement au début des essais. Ainsi la température à l'endroit $t_A°$ atteignait déjà 150 °C après 10 minutes pour osciller ensuite autour d'une moyenne de l'ordre de 145 °C pendant la première heure et aboutir à 160 °C après 150 minutes.

Ces tests confirment donc le rôle modérateur joué par l'écran dans la première phase des tests.

Deuxième type d'essais.

Ces essais ont été effectués avec un montage du type montré à la figure 2 dans lequel l'élément 1 était constitué par un tube en acier d'un diamètre intérieur de 50 mm. Ce tube était fermé à une distance de 700 mm à partir de la paroi.

La collerette était similaire à celle du premier type d'essais avec deux feuilles d'aluminium et était montée autour du tube en acier sur un tuyau en chlorure de polyvinyle d'un diamètre intérieur de 120 mm et d'une longueur correspondant à la largeur de la collerette qui est donc de 500 mm.

L'espace entre le tube et la collerette était fermé à l'extrémité de cette dernière, opposée à la paroi, par une bavette, formée d'une toile de verre, et un diaphragme était monté à l'intérieur de cet espace pour créer une étanchéité supplémentaire entre le tube et la collerette.

Un incendie a été simulé de la même façon que dans le premier type d'essais.

Il a été constaté que la température du tube d'acier, à l'endroit où il sortait de la collerette, augmentait, après 5 minutes, d'une façon pratiquement linéaire en fonction du temps, pour atteindre une température de 107 °C, après 3 heures.

Ces essais, ainsi que d'autres, réalisés suivant les normes NBN 713020 ont permis de déterminer,

5

**0 065 338**

d'une façon assez imprévue, qu'il existe une relation très étroite, pour une performance au feu prédéterminée, entre le diamètre intérieur et la largeur de la collerette pour une épaisseur déterminée de celle-ci.

Un graphique a ainsi pu être établi sur base du premier type d'essais décrit ci-dessus.

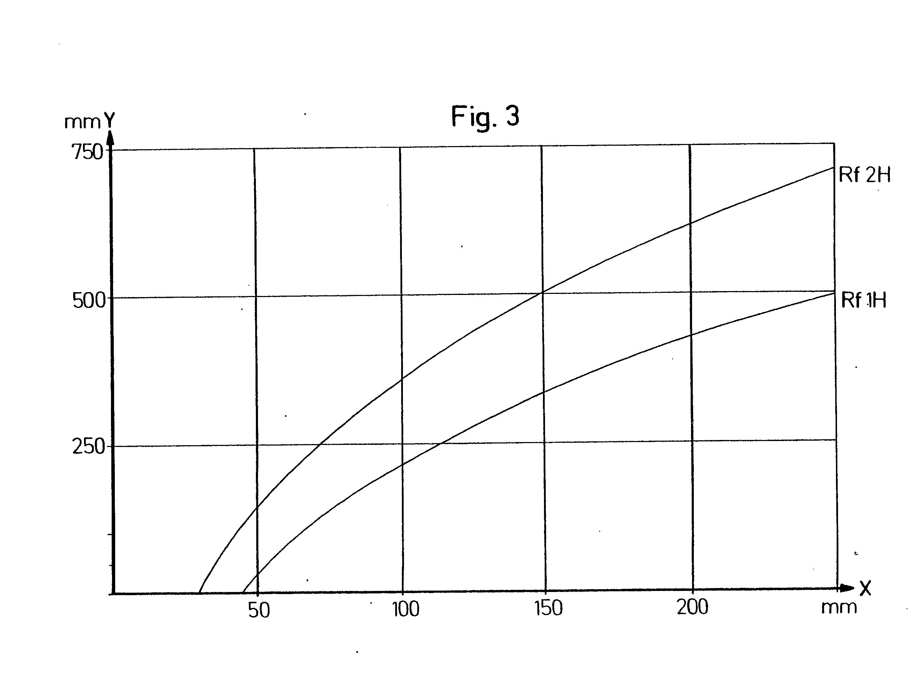

Ce graphique est montré à la figure 3. Il donne en ordonnée Y la largeur (en mm) de la collerette et en abscisse X (en mm) le diamètre intérieur d'un tuyau sur lequel est monté la collerette. La courbe Rf 1 H correspond à une résistance au feu pendant 1 heure, tandis que la courbe Rf 2 H correspond à une résistance au feu pendant 2 heures suivant les normes NBN 713020.

Ainsi, on constate par exemple pour un diamètre de tuyau de 100 mm, que la largeur de la collerette doit être de 225 mm pour une résistance au feu de 1 heure, et de 360 mm pour une résistance au feu de 2 heures.

Ces courbes ont été établies pour des collerettes ayant une épaisseur de 50 mm. Si le diamètre intérieur de la collerette est de 250 mm ou plus, il pourrait être utile d'augmenter l'épaisseur de la collerette, par exemple, à 75 mm.

Il est bien entendu que l'invention n'est pas limitée aux formes de réalisation décrites et représentées aux figures et que bien des variantes peuvent être envisagées sans sortir du cadre de la présente invention.

C'est ainsi qu'une même collerette peut entourer simultanément plusieurs éléments creux et que la matière incombustible et le mastic anti-feu utilisé peuvent être de différentes natures. Au lieu de laine de roche enduite de mastic anti-feu, on pourrait par exemple utiliser une matière incombustible sensiblement rigide, tel que du « Pical », monté, si nécessaire, contre l'élément par l'intermédiaire d'un joint souple et sensiblement compressible assurant l'étanchéité nécessaire, tel qu'un joint à base d'amiante.

Par ailleurs, des tests ont démontré que la collerette peut être montée de n'importe quel côté de la paroi, puisque les performances au feu sont pratiquement indépendantes de l'endroit de la collerette par rapport au feu. Ainsi, la collerette peut se situer du côté opposé de la paroi par rapport au feu comme dans les essais décrits ci-dessus ou du même côté du feu par rapport à la paroi.

Dans certains cas, on pourrait également prévoir une collerette de part et d'autre de la paroi ou traversant la paroi. Il faut alors, pour se baser sur le graphique, additionner les largeurs des deux collerettes.

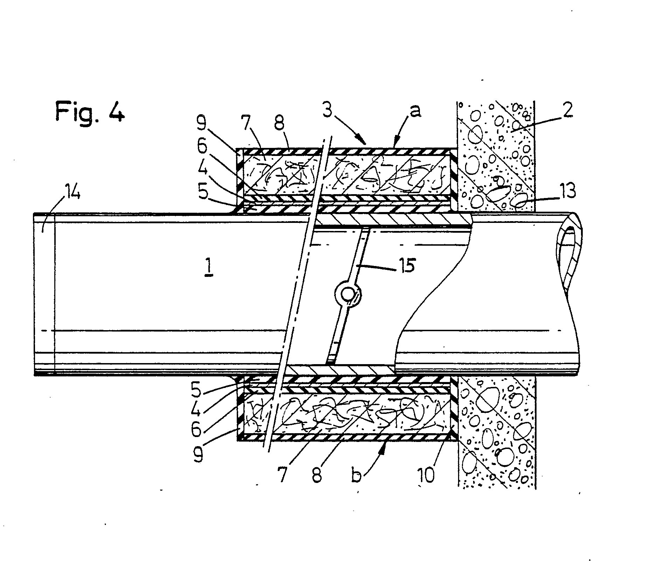

Si dans l'élément creux 1 a lieu un tirage ou aspiration de gaz tel que d'air, notamment par une gaine d'aération, on prévoit avantageusement dans cette dernière un clapet ou moyen analogue permettant de boucher ou de fermer cet élément au moment où un incendie se produit, de manière à couper ainsi le tirage ou l'aspiration. Un tel clapet a été montré à la figure 4 par la référence 15.

La fermeture du clapet peut se faire de préférence d'une manière automatique et est commandée à cet égard par exemple par un détecteur d'incendie, non représenté à cette figure 4.

On pourrait, le cas échéant, prévoir plusieurs clapets successifs.

Ce ou ces clapets remplissent en fait une fonction quelque peu similaire à celle des bouchons ou diaphragmes 11 montrés à la figure 2.

D'une façon imprévue, ces clapets ne doivent pas avoir de performances au feu dans le sens des portillons ou clapets coupe-feu connus.

Il suffit, en fait, qu'ils empêchent la circulation ou le tirage à l'intérieur de l'élément creux 1.

Dans certains cas, il pourrait être utile de prévoir de tels clapets même dans les éléments creux 1 dans lesquels, en fonctionnement normal, un tirage, circulation ou aspiration ne se produit pas, mais, dans lesquels par contre, en cas d'incendie, un tel phénomène pourrait se créer. Ce risque pourrait par exemple exister pour des tuyaux de grande section.

## Revendications

1. Coupe-feu pour le passage d'au moins un élément creux (1), tel que tuyau, gaine, tube, à travers une paroi (2) d'un bâtiment, notamment un mur ou plafond, comprenant une collerette (3) en matière sensiblement incombustible montée autour de l'élément (1), caractérisé en ce que la collerette (3) comprend au moins un écran (4) d'allure sensiblement cylindrique, s'étendant tout autour de l'élément et réalisé en un matériau sensiblement étanche au gaz, conducteur de la chaleur et présentant un point de fusion inférieur à 900 °C.

2. Coupe-feu suivant l'une ou l'autre des revendications précédentes, caractérisé en ce qu'il est réalisé en un matériau conducteur de la chaleur présentant un point de fusion inférieur à 650 °C.

3. Coupe-feu suivant l'une quelconque des revendications 1 à 2, caractérisé en ce que l'écran (4) s'étend à l'intérieur de la collerette (3).

4. Coupe-feu suivant l'une quelconque des revendications 1 à 3, caractérisé en ce que l'écran (4) est noyé dans du mastic anti-feu (5 et 6).

5. Coupe-feu suivant l'une quelconque des revendications 3 et 4, caractérisé en ce que l'écran (4) est constitué d'une feuille d'aluminium.

6. Coupe-feu suivant l'une quelconque des revendications 1 à 5, caractérisé en ce que la collerette (3) est enduite intérieurement et extérieurement d'un mastic anti-feu.

7. Coupe-feu suivant l'une quelconque des revendications 1 à 6, caractérisé en ce que la largeur de la

6

collerette (3) est comprise entre 2 et 6 fois le diamètre intérieur de l'élément creux (1), tandis que son épaisseur est comprise entre 3 et 10 cm.

8. Coupe-feu suivant l'une quelconque des revendications 1 à 7, caractérisé en ce que la collerette (3) précitée est montée contre la surface extérieure de l'élément creux (1).

9. Coupe-feu suivant la revendication 8, caractérisé en ce qu'une matière formant joint, telle qu'une couche d'un mastic anti-feu (10), est prévue entre l'élément (1) et la collerette (3) de manière à réaliser l'étanchéité entre ces derniers.

10. Coupe-feu suivant l'une quelconque des revendications 1 à 7, caractérisé en ce que, pour le passage, à travers une paroi (2), d'un élément (1) pouvant être soumis à des déplacements et/ou dilatations longitudinaux et/ou transversaux relativement importants, notamment d'un tube en acier, dans lequel circule un fluide à température variable ou d'un tube pouvant subir des déformations sous l'effet d'une variation de température extérieure, la collerette précitée (3) s'étend à une certaine distance autour de cet élément (1), de manière à ce que ce dernier puisse se déplacer et se dilater librement en des directions longitudinales et transversales à l'intérieur de la collerette (3).

11. Coupe-feu suivant la revendication 10, caractérisé en ce qu'il comprend au moins un bouchon souple et compressible (11), tel qu'un diaphragme, en matière sensiblement incombustible et étanche aux gaz, placé à l'intérieur de la collerette (3), autour de l'élément (1) pouvant être soumis à des déplacements et/ou dilatations longitudinaux et/ou transversaux relativement importants.

12. Coupe-feu suivant la revendication 11, caractérisé en ce qu'un bouchon (11) susdit est prévu à proximité de chacune des extrémités de la collerette (3), à l'intérieur de celle-ci.

13. Coupe-feu suivant l'une quelconque des revendications 10 à 12, caractérisé en ce que la collerette (3) est montée, de préférence par l'intermédiaire d'un mastic anti-feu (5'), sur un élément creux (1'), notamment en un matériau non conducteur, comme de la matière plastique, de plus grande section que l'élément (1) pouvant être soumis à des déplacements et/ou dilatations longitudinaux et/ou transversaux relativement importants, de manière à s'étendre à une certaine distance autour de ce dernier.

14. Coupe-feu suivant la revendication 13, caractérisé en ce que cet élément (1') de plus grande section est constitué d'un bout de tuyau en matière plastique s'étendant dans une ouverture (13) pratiquée dans la paroi (2) autour de l'élément.

15. Coupe-feu suivant l'une quelconque des revendications 10 à 14, caractérisé en ce que la distance séparant l'élément (1) de la collerette (3) est comprise entre 1 et 10 cm et de préférence 2 et 5 cm.

16. Coupe-feu suivant l'une quelconque des revendications 10 à 15, caractérisé en ce que la collerette (3) présente, à son extrémité opposée à celle appliquée contre la paroi (2), une bavette d'obturation souple (12) s'étendant autour de l'élément (1) jusque contre la surface extérieure de ce dernier.

17. Coupe-feu suivant la revendication 16, caractérisé en ce que la bavette (12) est maintenue contre la surface extérieure de l'élément par l'intermédiaire d'un mastic anti-feu.

18. Coupe-feu suivant l'une ou l'autre des revendications 16 et 17, caractérisé en ce que la bavette (12) s'étend suivant un tronc de cône ou en accordéon ou soufflet autour de l'élément à l'extérieur de la collerette (3), de manière à pouvoir suivre des déplacements de l'élément s'étendant à l'intérieur de la collerette (3).

19. Coupe-feu suivant l'une quelconque des revendications 1 à 18, caractérisé en ce que la collerette (3) est montée en applique contre la paroi (2) par l'intermédiaire d'une plaque en une matière sensiblement incombustible autour de cet élément.

20. Coupe-feu suivant l'une quelconque des revendications 1 à 19, caractérisé en ce que la collerette (3) est montée à au moins un des côtés de la paroi (2) et en applique contre cette dernière.

21. Coupe-feu suivant l'une quelconque des revendications 1 à 20, caractérisé en ce que des moyens d'obturation, tel qu'un ou plusieurs clapets (15) sont prévus à l'intérieur de l'élément creux, sensiblement à la hauteur de la collerette (3), ces moyens étant montés de manière à pouvoir obturer l'élément creux en cas d'incendie.

## Claims

1. Fire-break for passing at least one hollow element (1), such as a pipe, sleeve or tube, through a building wall (2), particularly a wall or ceiling, comprising a flange (3) from substantially incombustible material mounted about the element (1), characterized in that the flange (3) comprises at least one substantially cylindrical baffle (4) extending all around the element and made from a substantially gastight heat conducting material having a smelting point lower than 960 °C.

2. Fire-break according to claim 1, characterized in that the baffle (4) is made from a heat conducting material having a melting point lower than 650 °C.

3. Fire-break according to claims 1 or 2, characterized in that the baffle (4) extends inside the flange (3).

4. Fire-break according to anyone of claims 1 to 3, characterized in that the baffle (4) is embedded in a fire-proof compound (5 and 6).

7

5. Fire-break according to anyone of claims 1 to 4, characterized in that the baffle (4) is made from an aluminium foil.

6. Fire-break according to anyone of claims 1 to 5, characterized in that the flange (3) is covered inside and outside by a fire-proof compound.

7. Fire-break according to anyone of claims 1 to 6, characterized in that the breadth of the flange (3) is comprised between 2 and 6 times the inner diameter of the hollow element (1).

8. Fire-break according to anyone of claims 1 to 7, characterized in that said flange (3) is mounted against the outside surface of the hollow element (1).

9. Fire-break according to claim 8, characterized in that a point forming material, such as a layer of a fire-proof compound (10), has been provided between the element (1) and the flange (3), so as to insure sealing between the latter.

10. Fire-break according to anyone of claims 1 to 7, characterized in that, for passing through a wall (2) an element (1') which might be subjected to relatively substantial lengthwise and/or cross-wise displacements and/or expansions, notably a steel tube, inside which flows a varying temperature fluid, or a tube being able to undergo deformations due to an outer temperature variation, the flange (3) extends some distance away around this element (1'), so that the latter may move and expand freely along lengthwise and cross-wise directions inside the flange (3).

11. Fire-break according to claim 10, characterized in that it comprises at least one flexible and compressible plug (11), such as a diaphragm, made from a substantially incombustible gas-tight material, which is arranged inside the flange (3), around the element (1) which might be subjected to relatively strong lengthwise and/or cross-wise displacements and/or expansions.

12. Fire-break according to claim 11, characterized in that said plug (11) is provided close to each of the flange ends inside this flange.

13. Fire-break according to anyone of claims 10 to 12, characterized in that the flange (3) is mounted, preferably by means of a fire-proof compound (5'), on the hollow element (1'), notably from a material which does not conduct heat, such as a plastic material, with a larger cross-section than the element which might be subjected to relatively strong lengthwise and/or cross-wise displacements and/or expansions, in such a way as to extend some distance away about said latter element.

14. Fire-break according to claim 13, characterized in that element (1') with a larger cross-section is made from a length of plastic pipe which extends through an opening (13) provided in the wall (2) about the element.

15. Fire-break according to anyone of claims 10 to 14, characterized in that the spacing between the element (1) and the flange (3) lies between 1 and 10 cm, and preferably between 2 and 5 cm.

16. Fire-break according to anyone of claims 10 to 15, characterized in that the flange (3) is provided at the end thereof opposite the end bearing against the wall with a flexible seal flap (12) which extends around said element (1) up to against the outer surface thereof.

17. Fire-break according to claim 16, characterized in that the flap (12) is maintained against the outer surface of the element by means of a fire-proof mastic.

18. Fire-break according to anyone of claims 16 or 17, characterized in that the flap (12) extends in the chape of a truncated cone, a pleated member or a concertina around the element, outside the flange (3), so as to be able to follow displacements of that element which extends inside the flange (3).

19. Fire-break according to anyone of claims 1 to 18, characterized in that the flange (3) is mounted against the wall (2) through a plate from substantially incombustible material which lies around this element.

20. Fire-break according to anyone of claims 1 to 19, characterized in that the flange (3) is mounted at one side at least of the wall (2) and is applied thereon.

21. Fire-break according to anyone of claims 1 to 20, characterized in that sealing means, such as one or a plurality of flaps (15), are provided inside the hollow element, substantially at the level with the flange (3), these means being so arranged as to seal off the element in the case of a fire.

## Patentansprüche

1. Feuerschutz für die Durchführung wenigstens eines Hohlelements (1), wie etwa eines Rohrs, einer Hülse oder eines Schlauchs, durch eine Gebäudewand (2), insbesondere eine Mauer oder Decke, der einen um das Element (1) herum montierten Kragen (3) aus im wesentlichen unbrennbarem Material aufweist, dadurch gekennzeichnet, daß der Kragen (3) wenigstens einen im wesentlichen zylindrischen Schirm (4) aufweist, der sich ganz um das Element herum erstreckt und aus einem im wesentlichen gasdichten Material ausgeführt wird, das wärmeleitfähig ist und dessen Schmelzpunkt unterhalb von 900 °C liegt.

2. Feuerschutz nach Anspruch 1, dadurch gekennzeichnet, daß er aus einem wärmeleitfähigen Material besteht, dessen Schmelzpunkt unterhalb von 650 °C liegt.

3. Feuerschutz nach einem der Ansprüche 1 bis 2, dadurch gekennzeichnet, daß der Schirm (4) sich im Innern des Kragens (3) erstreckt.

4. Feuerschutz nach einem der Ansprüche 1 bis 3, dadurch gekennzeichnet, daß der Schirm (4) in einem flammhemmenden Mastix (5 und 6) eingebettet ist.

5. Feuerschutz nach einem der Ansprüche 3 und 4, dadurch gekennzeichnet, daß der Schirm (4) aus einer Aluminiumfolie besteht.

6. Feuerschutz nach einem der Ansprüche 1 bis 5, dadurch gekennzeichnet, daß der Kragen (3) innen und außen mit einem flammhemmenden Mastix überzogen ist.

7. Feuerschutz nach einem der Ansprüche 1 bis 6, dadurch gekennzeichnet, daß die Weite des Kragens (3) im Bereich des 2- bis 4-fachen des Innendurchmessers des Hohlelements (1) liegt, während seine Dicke zwischen 3 und 10 cm liegt.

8. Feuerschutz nach einem der Ansprüche 1 bis 7, dadurch gekennzeichnet, daß der Kragen (3) auf der Außenoberfläche des Hohlelements (1) angebracht ist.

9. Feuerschutz nach Anspruch 8, dadurch gekennzeichnet, daß ein Verbindungsmaterial, wie etwa eine Schicht aus flammhemmendem Mastix (10) zwischen dem Element (1) und dem Kragen (3) in der Weise vorgesehen ist, daß dadurch die Abdichtung zwischen den letzteren erfolgt.

10. Feuerschutz nach einem der Ansprüche 1 bis 7, dadurch gekennzeichnet, daß für die Durchführung eines Elements (1) durch eine Wand (2), wobei das Element verhältnismäßig bedeutenden Verschiebungen und/oder -dehnungen in Längs- und/oder Querrichtung unterworfen werden kann, insbesondere eines Stahlrohrs, in dem ein Fluid veränderlicher Temperatur umläuft, oder eines durch Einwirkung einer Außentemperaturänderung verformbaren Rohres, der vorgenannte Kragen (3) sich in einer bestimmten Entfernung um das Element (1) derart erstreckt, daß das letztere sich im Inneren des Kragens (3) in Längs- und Querrichtung frei verschieben und ausdehnen kann.

11. Feuerschutz nach Anspruch 10, gekennzeichnet durch wenigstens einen biegsamen und zusammendrückbaren Stopfen (11), wie ein Diaphragma, aus im wesentlichen unbrennbarem und gasdichtem Material, das im Inneren des Kragens (3) um das Element (1) herumgelegt ist, das vergleichsweise bedeutenden Längs- und/oder Querverschiebungen und/oder -dehnungen unterworfen werden kann.

12. Feuerschutz nach Anspruch 11, dadurch gekennzeichnet, daß ein Stopfen (11) im Inneren des Kragens (3) in der Nähe eines jeden Endes vorgesehen ist.

13. Feuerschutz nach einem der Ansprüche 10 bis 12, dadurch gekennzeichnet, daß der Kragen (3), bevorzugt durch einen dazwischen liegenden, flammhemmenden Mastix (5'), auf einem Hohlelement (1') angeordnet ist, das insbesondere aus einem nicht-leitenden Material, wie einem Kunststoff, besteht, wobei der größere Teil des Elements (1) vergleichsweise bedeutenden Längs- und/oder Querverschiebungen und/oder -dehnungen unterworfen werden kann, so daß der Kragen sich in einer bestimmten Entfernung um das Element herum erstreckt.

14. Feuerschutz nach Anspruch 13, dadurch gekennzeichnet, daß das Element (1') zum größten Teil aus einem Kunststoffrohrende besteht, das sich in eine Öffnung (13) erstreckt, die in der Wand (2) um das Element herum ausgebildet ist.

15. Feuerschutz nach einem der Ansprüche 10 bis 14, dadurch gekennzeichnet, daß der Abstand zwischen dem Element (1) und dem Kragen (3) von 1 bis 10 cm und bevorzugt von 2 bis 5 cm beträgt.

16. Feuerschutz nach einem der Ansprüche 10 bis 15, dadurch gekennzeichnet, daß der Kragen (3) an seinem der Wand (2) abgekehrten Ende, eine biegsame Dichtungsmembran (12) aufweist, die sich um das Element (1) herum bis zu seiner Außenoberfläche erstreckt.

17. Feuerschutz nach Anspruch 16, dadurch gekennzeichnet, daß die Membran (12) durch einen dazwischen liegenden , flammhemmenden Mastix auf der Außenoberfläche des Elements festgehalten wird.

18. Feuerschutz nach einem der Ansprüche 16 oder 17, dadurch gekennzeichnet, daß die Membran (12) in Form eines Kegelstumpfs, einer Ziehharmonika oder eines Balges um das Element herum außerhalb des Kragens (3) derart angeordnet ist, daß sie den Verschiebungen des sich im Innern des Kragens (3) erstreckenden Elements folgen kann.

19. Feuerschutz nach einem der Ansprüche 1 bis 18, dadurch gekennzeichnet, daß der Kragen (3) mittels einer das Element umgebenden (umgreifenden) Platte aus im wesentlichen unbrennbarem Material an der Wand (2) befestigt ist.

20. Feuerschutz nach einem der Ansprüche 1 bis 19, dadurch gekennzeichnet, daß der Kragen (3) an wenigstens einer Seite der Wand (2) durch Aufsetzen angebracht ist.

21. Feuerschutz nach einem der Ansprüche 1 bis 20, dadurch gekennzeichnet, daß Dichtvorrichtungen, wie eine oder mehrere Klappen (15), im Inneren des Hohlelements, insbesondere in Höhe des Kragens (3), vorgesehen sind, wobei diese Vorrichtungen in der Weise angeordnet sind, daß sie im Brandfall das Hohlelement abdichten.

Fig. 1

Fig. 2

Fig. 3

Fig. 4